# EUROPÄISCHE PATENTANMELDUNG

(11) **EP 2 063 497 A1**
(43) Veröffentlichungstag der Anmeldung: **27.05.2009**
(21) Anmeldenummer: 08405283.6
(22) Anmeldetag: 19.11.2008
(51) Int. Cl.: H01R 13/627, G02B 6/38

(54) **Steckverbinder**

(30) Priorität: 26.11.2007 CH 18182007
(71) Anmelder: Reichle & De-Massari AG, 8622 Wetzikon (CH)
(72) Erfinder: Müller, Pascal, 8055 Zürich (CH)
(74) Vertreter: Walser, Peter

(57) **Zusammenfassung**

Der erfindungsgemässe Stecker mit Gehäuse (5) und Rastklinke (2.4) zeichnet sich im Wesentlichen dadurch aus, dass ein Betätigungselement (21,22;31) vorhanden ist, welches aussenseitig am Gehäuse vorhanden und relativ zu diesem bewegbar ist. Das Betätigungselement verläuft gemäss der Erfindung mindestens bereichsweise entlang einer von der Oberseite (d.h. der Klinkenseite) verschiedenen Seite, bspw. seitlich entlang beiden Seiten. Insbesondere kann das Betätigungselement im Bereich des Übergangs zwischen einer Steckerpartie (11) und einer querschnittsgrösseren zweiten (hinterseitigen) Partie (12) vollständig seitlich verlaufen und frei von entlang der Klinkenseite angeordneten Teilen sein.
Das Betätigungselement weist eine Betätigungspartie, eine Bewegungsübertragungspartie und eine Auslösepartie auf, wobei die Auslösepartie in Kontakt mit der Rastklinke steht oder bringbar ist und die Bewegungsübertragungspartie mindestens bereichsweise entlang einer von der ersten Seite verschiedenen Seite des Gehäuses verläuft.

## Beschreibung

Die vorliegende Erfindung betrifft einen Steckverbinder für die Datenübertragung und Telekommunikation, insbesondere elektrische Kabel mit einer Mehrzahl von elektrischen Leitern und/oder optische Kabel mit mindestens einem Lichtleiter.

Die zunehmende Digitalisierung in allen Bereichen des täglichen Lebens führt dazu, dass Datenübertragungsleitungen und mit ihnen auch entsprechende Steckverbindungen von ständig zunehmender Bedeutung sind und zwar sowohl im Telekommunikations- und Bürobereich als auch in anderen Bereichen, namentlich dem Industrie-, der Gebäudeautomatisierungs- und der Audiobereich. Dabei wachsen mit den Anforderungen an die Datenleitungen auch die Anforderungen an die Steckverbindungen. Insbesondere müssen die Steckverbindungsteile - Stecker und Steckerbuchsen - auf immer kleinerem Raum immer mehr Funktionen wahrnehmen.

Es ist üblich, Steckverbindungen mit einem Verrastmechanismus zu versehen, so dass ein einmal eingesteckter Stecker sich nicht ohne Absicht eines Benutzers löst. Besonders bekannt und populär sind Steckverbindungen, bei denen der Stecker eine Rastklinke aufweist, durch die die Verrastung des Steckers mit der Steckerbuchse bewirkt wird; wobei die Rastverbindung mit einer einfach von Hand zu bewerkstelligenden Betätigung der Rastklinke lösbar ist. Ein weltweit verbreitete Steckverbindung dieser Art ist bspw. das Steckverbindungssystem vom Typ RJ45.

Insbesondere in Anordnungen, in denen viele Steckplätze nebeneinander vorhanden sind oder in denen sich vor der jeweiligen Steckerbuchse Bauteile befinden - bspw. aussen vorstehende Kragen zur mechanischen Stabilisierung der Stecker - kann es manchmal mühsam oder fast unmöglich sein, die Rastklinke von Hand zu bedienen, da ihre Zugänglichkeit eingeschränkt ist. Zur Lösung dieses Problems wurden schon verschiedentlich Mechanismen vorgeschlagen. Diese sehen vor, dass entweder die Rastklinke durch ein separates, von der Steckerbuchse entferntes Betätigungsmittel betätigt werden kann, oder die das Verlängern der Rastklinke "nach hinten", in einen von der Steckerbuchse entfernteren Bereich vorsehen. Als Beispiele seien die Schriften DE 10 2004 038 123 (Betätigung mit Hilfe eines in eine Gehäuseöffnung einzuführenden Werkzeugs) US 6,866,532 und US 7,101,212 (oberseitig am Gehäuse vorhandene(r) Kipphebel bzw. Zunge), WO 2007/044310 (oberseitig entlang des Gehäuses verschiebbare Gleitklinke) oder CH 695 523 (im Innern des Gehäuses geführter, verschiebbarer Verbindungsstift mit Betätigungsmittel und mit Rampe zur Betätigung der Klinke) genannt.

Allen diesen Beispielen ist gemein, dass sie einen Betätigungsmechanismus mit Elementen vorsehen, die entweder auf der Klinkenseite (mit 'Klinkenseite' oder 'Oberseite' ist diejenige Steckerseite gemeint, an der auch die Klinke vorhanden ist) oder mindestens teilweise im Innern des Gehäuses angeordnet sind. Das ist in vielen Situationen eine befriedigende Lösung. Es gibt aber vermehrt Stecker, die eine in die entsprechende Steckerbuchse passende, vorderseitige Steckerpartie und daran anschliessend eine im Querschnitt grössere, hinterseitige Partie aufweisen. Diese hinterseitige Partie kann datenleitungstypische Bauteile fassen, bspw. Beschaltungsmittel für elektrische Datenleitungen, oder Führungsmittel etc. für optische Datenleiter. Es kommt oft vor, dass aus Platzgründen im Innern des Gehäuses kein Betätigungmechanismus Platz hat. Die Bewegungsfreiheit von oberseitig angebrachten Betätigungshebeln oder dergleichen kann je nach Konfiguration aus geometrischen Gründen von Elementen wie bspw. vorstehenden Kragen oder anderen Elementen der Steckerbuchse behindert sein. Daher waren Stecker des genannten Typs mit verbreiterter hinterseitiger Partie bisher nicht für Steckerbuchsenanordnungen mit vorstehenden Elementen geeignet.

Ein Beispiel für einen Steckertyp mit verbreiterter hinterseitiger Partie ist der in der Schrift EP 1 693 933 beschriebene Stecker, ein Beispiel für bisher nicht passende Steckerbuchsen mit vorstehendem Kragen ist die Siemens Industrial Ethernet Scalance X-100-Produktelinie.

Es ist folglich Aufgabe der Erfindung, einen Stecker mit Klinke zur Verfügung zu stellen, welcher die Betätigung der Klinke in Steckerbuchsenanordnungen ermöglicht, in denen das bisher nicht möglich war.

Diese Aufgabe wird gelöst durch einen Stecker wie er in den Patentansprüchen definiert ist.

Der erfindungsgemässe Stecker mit Gehäuse und Rastklinke zeichnet sich im Wesentlichen durch ein Betätigungselement aus, welches am Gehäuse vorhanden und relativ zu diesem (bzw. dem Teil, der die Rastklinke trägt) bewegbar ist. Das Betätigungselement verläuft mindestens bereichsweise entlang einer von der Oberseite (d.h. der Klinkenseite) verschiedenen Seite, bspw. seitlich entlang beiden Seiten. Mit anderen Worten kann das Betätigungselement insbesondere im Bereich des Übergangs zwischen einer Steckerpartie und einer querschnittsgrösseren zweiten (hinterseitigen) Partie vollständig seitlich und/oder eventuell auf der Gegenseite der Klinkenseite verlaufen und frei von entlang der Klinkenseite angeordneten Teilen sein. Das Betätigungselement erlaubt die unmittelbare und/oder ggf. mittelbare Übertragung einer Bewegung von der Betätigungspartie auf die Auslösepartie. Es ist im Allgemeinen formsteif und/oder frei von bei der Auslösebewegung gegeneinander bewegbaren Teilen und/oder eventuell einstückig. Beispielsweise wirkt das Betätigungselement in der Art eines Kipphebels oder eines Schiebers, wobei wie angedeutet eine Kraftübertragung entlang der von der Oberseite verschiedenen Seite stattfindet.

Zum Beispiel kann das Betätigungselement bzw. eine Bewegungsübetragungspartie davon aussenseitig am Gehäuse angeordnet sein, was eine besonders einfach zu realisierende Anordnung darstellt. Die Bewegungsübetragungspartie kann dabei unmittelbar dem Gehäuse entlang geführt sein. Alternativ dazu kann das Betätigungselement auch bereichsweise unter einer Gehäuseoberfläche - bspw. in einem Zwischenraum zwischen einem inneren Gehäuseteil und einem Übergehäuseteil - entlang dem Gehäuse verlaufen. "Entlang einer von der Klinkenseite (der ersten Seite) verschiedenen Seite" ist dann auch im Bezug auf die Steckerachse und die informationsübertragenden Elemente (d.h. elektrische Leiter/Kontakte bzw. Lichtleiter) zu verstehen.

Durch diese an sich einfache Massnahme wird die eingangs gestellte Aufgabe gelöst. Eine Bewegung eines entlang der Oberseite angeordneten Betätigungselements würde nämlich - damit die Klinke betätigt werden kann - aus geometrischen Gründen immer Bewegungsspielraum und damit (nicht vorhandenen) Platz um das Gehäuse herum benötigen, und zwar insbesondere auch im Bereich des Übergangs zwischen einer Steckerpartie und einer querschnittsgrösseren zweiten (hinterseitigen) Partie.

Bei einer seitlichen Führung des Betätigungselements ist das nicht der Fall. Vielmehr kann die Bewegung des Betätigungselements vollständig entlang der Seitenwand des Gehäuses erfolgen, ohne Bewegungskomponenten senkrecht zur GehäuseSeitenwand. Bei einer eventuellen unterseitigen (auf der Gegenseite zur Klinkenseite) Führung des Betätigungselements kann eine Bewegungsübertragungspartie des Betätigungselements in der Art eines Bandes flexibel biegbar ausgeformt sein, da es nur Zugkräfte übertragen muss (die Klinke muss "nach unten" gezogen werden). Dadurch kann das Betätigungselement ebenfalls entlang der Gegenwand geführt werden. In beiden Fällen beschränkt sich der laterale Platzbedarf auf die laterale Ausdehnung des Betätigungselementes. Es ist also mindestens im Bereich des genannten Übergangs kein zusätzlicher Bewegungsspielraum erforderlich.

Eine Betätigungspartie des Betätigungselementes kann auch bei der erfindungsgemässen Konstruktion ohne Weiteres auf der Klinkenseite vorhanden sein, was sogar bevorzugt ist. Sie ist dafür vorgesehen und ausgebildet, dass der Finger oder eventuell ein Werkzeug des Benutzers daran angreift, und sie ist entsprechend zugänglich, auch wenn der Stecker bei engen Platzverhältnissen in die Buchse eingesteckt ist.

Beispielsweise kann das Betätigungselement einen Kipphebel aufweisen, der am Gehäuse befestigt oder befestigbar ist, wobei eine Auslösepartie des Betätigungselement bei Betätigung des Kipphebels die Rastklinke auslöst.

Die in diesem Text verwendeten, die Orientierung betreffenden Bezeichnungen wie "Oberseite", "Vorderseite" etc. werden nur zur besseren Verständlichkeit verwendet und sind keinesfalls so zu verstehen, dass sie Anwendungen des Steckers auf bestimmte Orientierungen beschränken. "lateral" bezieht sich auf Richtungen, die betreffend einer Steckerachse radial sind. "Oberseite" oder "Klinkenseite" bezeichnet generell die laterale Seite des Steckergehäuses, an der die Klinke vorhanden ist (auch wenn man in Anwendungen und Literatur oft Anordnugen sieht, bei denen die Klinke "unten" ist). Die Gegenseite die der Klinkenseite gegenüberliegende Seite. "Seitlich" bezieht sich auf Seitenwände und Richtungen, die senkrecht zur Klinkenseite sind. Mit "vorne" oder "Vorderseite" ist die axiale Richtung zum steckerseitigen Ende (zur Steckerbuchse) hin bezeichnet, "hinten" ist die entgegengesetzte Richtung (zum Kabel hin).

Das Gehäuse des Steckers kann einstückig oder mehrteilig aufgebaut sein, es kann aus dem mindestens einen die eigentliche Steckerpartie bildenden Teil bestehen oder zusätzlich noch ein Übergehäuse aufweisen; im vorliegenden Text wird nicht auf Unterschiede zwischen verschiedenen Gehäuseteilen eingegangen.

Nachfolgend werden Ausführungsbeispiele des erfindungsgemässen Steckers anhand von Figuren beschrieben. Es zeigen:
- **Figur 1** eine Ansicht einer ersten Ausführungsform erfindungsgemässen Steckers; und
- **Figur 2** eine Seitenansicht einer weiteren Ausführungsform erfindungsgemässen Steckers.

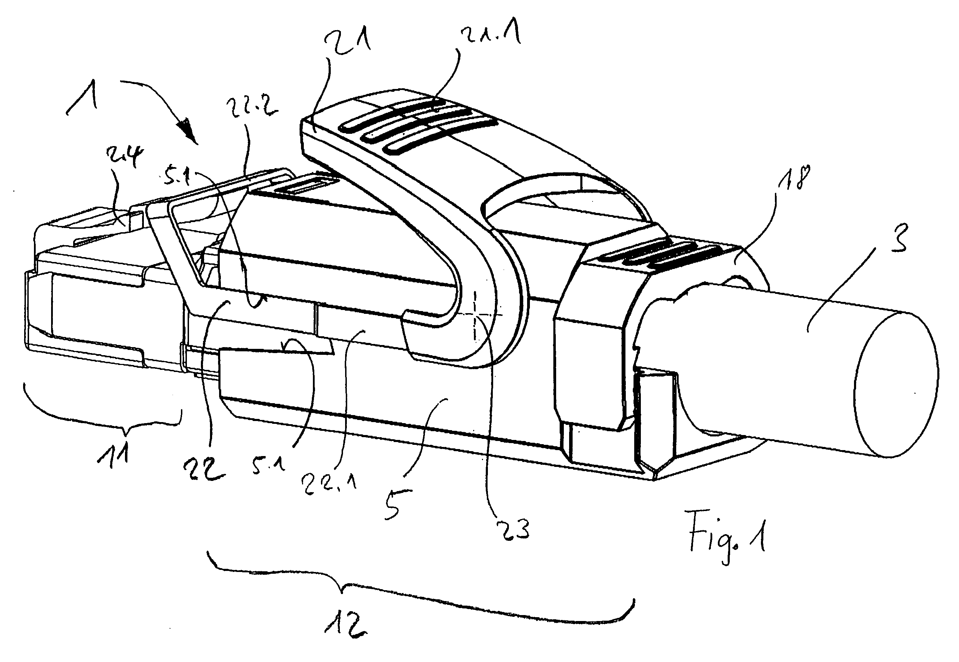

Der in **Figur 1** dargestellte Stecker 1 ist zum Stecker, wie er in der EP 1 693 933 - dort beispielsweise anhand der Figuren 1 und 4 - beschrieben ist, typenähnlich. Betreffend der Ausgestaltung des Steckers, dessen Zweck und insbesondere dessen innerem Aufbau wird hier ausdrücklich auf diese Schrift EP 1 693 933 verwiesen. Auf eine Wiederholung der Beschreibung von Teilen und Aspekten des dort beschriebenen Steckers wird an dieser Stelle verzichtet.

Im Unterschied zum in EP 1 693 933 beschriebenen Stecker wird beim Stecker gemäss Figur 1 eine Zugentlastung für das Kabel 3 durch einen aufclipbaren Bügel 18 gebildet, der mit dem Stecker-Gehäuse verrastet. Anstelle dieser Lösung für die Zugentlastung können auch andere Zugentlastungsmittel vorgesehen sein, bspw. die in EP 1 693 933 beschriebene Überwurfmutter.

Gut sichtbar in der Figur 1 ist, dass das Gehäuse 5 des Steckers und damit der ganze Stecker eine vordere, schlankere Steckerpartie 11 und eine hintere, querschnittsgrössere zweite Partie 12 aufweist.

Die in Figur 1 gezeichnete Ausführungsform des erfindungsgemässen Steckers weist ein Betätigungselement auf, das hier zweiteilig ist und einen Kipphebel 21 und einen Bügel 22 aufweist. Der Bügel bildet zwei als die Bewegungsübertragungspartie fungierende Holme 22.1 und einen die Auslösepartie bildenden Steg 22.2, der aussenseitig über die Rastklinke verläuft. Im Bereich eines Drehpunktes 23 weist der Kipphebel 21 nicht dargestellte, nach innen (in entsprechende Öffnungen des Gehäuses hinein) ragende Drehzapfen auf. Durch Druck auf die Betätigungspartie, die durch eine Oberseite 21.1 des Kipphebels gebildet wird, wird das Betätigungselement als Ganzes um den Drehpunkt (streng genommen handelt es sich um eine Drehachse durch den eingezeichneten Drehpunkt und das ihm gegenüberliegende Pendant) verschwenkt, wodurch der Steg 22.2 die Klinke nach unten drückt und auslöst. Die Rückstellung in den gezeichneten Ausgangszustand erfolgt aufgrund der Federkraft der Klinke 2.4.

Auf der Oberseite (Klinkenseite) sind noch Rippen eingezeichnet, die die Betätigung erleichtern.

Der Kipphebel mit angeformtem Drehzapfen kann bspw. aus Kunststoff gefertigt sein, während der Bügel 22 metallisch sein kann.

Am Gehäuse sind noch Anschlagkanten 5.1 vorhanden, die die Schwenkbewegung des Betätigungselements in beide Richtungen begrenzen.

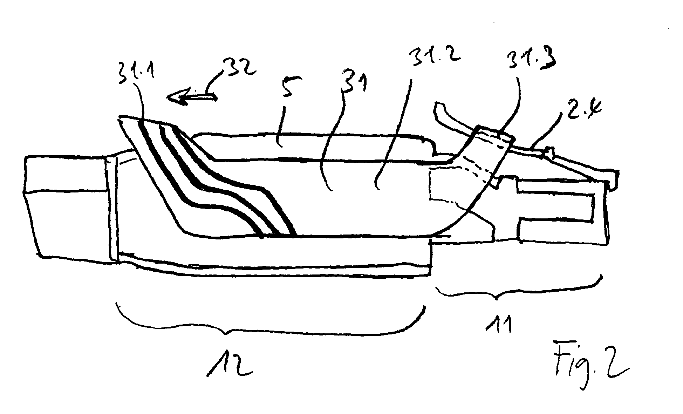

In der Variante gemäss **Figur 2** ist das Betätigungselement 31 gegenüber dem Gehäuse 5 nicht schwenkbar, sondern in axialer Richtung translatorisch verschiebbar. Das Betätigungselement 31 ist hier einstückig. Es weist wie das Betätigungselement gemäss Figur 1 eine auf der Klinkenseite und teilweise seitlich verlaufende Betätigungspartie mit Rippen 31.1, beidseitig je seitlich verlaufende Holme 31.2 und einen über die Klinke geführten Steg 31.3 auf. Durch ein Verschieben des Betätigungselements entlang des Pfeils 32 wird die Klinke 2.4 nach unten gedrückt und betätigt.

Das Gehäuse kann noch (hier nicht dargestellte) Ausformungen wie beispielsweise Führungsschlitze für die Führung des Betätigungselements und/oder zum Bilden von Endanschlägen aufweisen.

Es sind viele weitere Varianten denkbar, unter anderem sowohl für schwenkbare als auch für translatorisch verschiebbare Betätigungselemente, die die erfindungsgemässe Betätigung einer Steckerklinke ermöglichen:
- eine Feder (bspw. Blattfeder), die die rückstellende Kraft der Klinke unterstützt; in der Ausführungsform gemäss Fig. 1 könnte die Feder unterhalb der Betätigungspartie 21.1 liegen;
- vom Gezeigten abweichende Materialwahl, bspw. ein einstückiges, metallisches oder aus Kunststoff bestehendes Betätigungselement, ein mindestens bereichsweise mit Kunststoff beschichtetes metallisches Betätigungselement etc.
- Aussenseitig am Gehäuse angeformte Vorsprünge zur Führung und/oder Bildung von Endanschlägen, die bspw. zapfenartig ausgebildet sein können, ggf. auch anstelle der Drehzapfen.

Für schwenkbare Betätigungselemente:
- In Umkehrung des Obigen, Vorsehen von Führungszapfen des Gehäuses, die in entsprechende Führungslöcher des Betätigungselements eingreifen und so den Drehpunkt für die Schwenkbewegung bilden

Für translatorisch verschiebbare Betätigungselemente:
- Das Betätigungselement kann auch an einem äusseren Gehäuseteil angeformt sein, so dass in der Art einer Push-Pull-Verbindung das Gehäuseteil als Ganzes verschiebbar ist und zum Entriegeln zurückgezogen werden muss.

Und als grundlegend andere Variante:
- Vorsehen des Betätigungselements als mindestens ein unterseitig durch Führungsmittel geführtes, flexibles Band mit Lasche oder dergleichen zum Halten der Klinke und mit einem hinterseitigen Betätigungsknopf, der für die Betätigung entgegen der Federkraft der Klinke nach hinten zu ziehen ist.

Viele weitere Varianten sind denkbar.

## Patentansprüche

1. Stecker (1) für elektrische und/oder optische Daten- und/oder Telekommunikationskabel, aufweisend ein Gehäuse (5) und eine Rastklinke (2.4), die mit einem Gegenstück einer passenden Steckerbuchse einen Verrastmechanismus zum lösbaren Verrasten der Stecker-Steckerbuchsenverbindung bildet, wobei die Rastklinke an einer ersten Seite des Steckers vorhanden ist, und wobei der Stecker ferner ein Betätigungselement (21, 22; 31) aufweist , das relativ zu einem die Rastklinke aufweisenden Gehäuseteil bewegbar ist, **dadurch gekennzeichnet, dass** das Betätigungselement eine Betätigungspartie, eine Bewegungsübertragungspartie und eine Auslösepartie aufweist, wobei die Auslösepartie in Kontakt mit der Rastklinke (2.4) steht oder bringbar ist und die Bewegungsübertragungspartie mindestens bereichsweise entlang einer von der ersten Seite verschiedenen Seite des Gehäuses verläuft.

2. Stecker nach Anspruch 1, **dadurch gekennzeichnet, dass** das Betätigungselement (21, 22) einen Kipphebel (21) aufweist, der schwenkbar am Gehäuse (5) befestigt oder befestigbar ist und dass die Auslösepartie durch eine Schwenkbewegung des Kipphebels gegen eine Aussenseite der Rastklinke drückbar ist, wodurch die Rastklinke auslösbar ist.

3. Stecker nach Anspruch 2, **dadurch gekennzeichnet, dass** am Kipphebel (21) zwei einander gegenüberliegende, je radial nach innen verlaufende Drehzapfen vorhanden sind, die in entsprechende Führungslöcher eingreifen, die an einander gegenüberliegenden Seiten des Gehäuses vorhanden sind, oder dass am Gehäuse an einander gegenüberliegenden Seiten Führungszapfen vorhanden sind, die in entsprechende Führungslöcher des Kipphebels eingreifen.

4. Stecker nach Anspruch 1, **dadurch gekennzeichnet, dass** das Betätigungselement (31) relativ zum Gehäuse translatorisch verschiebbar ist und die Klinke (2.4) durch eine Translationsbewegung des Betätigungselements betätigt wird.

5. Stecker nach einem der vorangehenden Ansprüche, **dadurch gekennzeichnet, dass** die Bewegungsübertragungspartie zwei Holme (22.1; 31.2) aufweist, die je seitlich entlang zweier einander gegenüberliegender, von der ersten Seite verschiedenen Seiten verlaufen.

6. Stecker nach Anspruch 5, **dadurch gekennzeichnet, dass** die Betätigungspartie Kunststoff aufweist und die Bewegungsübertragungspartie metallisch ist.

7. Stecker nach einem der vorangehenden Ansprüche, **dadurch gekennzeichnet, dass** eine Kante (5.1) des Gehäuses (5) einen Anschlag für das Betätigungselement bildet.

8. Stecker nach einem der vorangehenden Ansprüche, **gekennzeichnet durch** ein Federelement, **durch** welches das Betätigungselement (21, 22; 31) von einer Auslöseposition selbsttätig in eine Ausgangsposition zurück bewegbar ist.

9. Stecker nach einem der vorangehenden Ansprüche, **dadurch gekennzeichnet, dass** das Gehäuse eine Steckerpartie (11) zum Einführen in eine Steckerbuchse und eine im Querschnitt grössere zweite Partie (12) aufweist, und dass das Betätigungselement (21, 22; 31) an einer axialen Position im Bereich des Übergangs zwischen der Steckerpartie und der zweiten Partie frei von entlang der ersten Seite verlaufenden Teilen ist.

10. Stecker nach Anspruch 9, **dadurch gekennzeichnet, das** Betätigungselement (21, 22; 31) im Bereich des Übergangs zwischen der Steckerpartie und der zweiten Partie vollständig entlang zweier einander gegenüberliegender, von der ersten Seite verschiedenen Seiten verläuft.
